(19) Europäisches Patentamt

European Patent Office

Office européen des brevets

(11) Veröffentlichungsnummer: **0 260 665**
**A2**

(12) **EUROPÄISCHE PATENTANMELDUNG**

(21) Anmeldenummer: 87113495.3

(51) Int. Cl.⁴: **H01G 4/06**

(22) Anmeldetag: 15.09.87

(30) Priorität: **18.09.86 DE 3631782**

(43) Veröffentlichungstag der Anmeldung:
**23.03.88 Patentblatt 88/12**

(84) Benannte Vertragsstaaten:
**DE FR NL SE**

(71) Anmelder: **Siemens Aktiengesellschaft Berlin und München**
**Wittelsbacherplatz 2**
**D-8000 München 2(DE)**

(72) Erfinder: **Kallhardt, Heinrich, Ing. grad.**
**Agnes-Bernauer-Strasse 42**
**D-8000 München 21(DE)**
Erfinder: **Murr, Alfred, Dr.rer.nat., Dipl.-Phys.**
**Wilhelm-Leibl-Strasse 5**
**D-8000 München 71(DE)**
Erfinder: **Heiss, Reinhold, Dipl.-Ing.(FH)**
**Falkenweg 1**
**D-8027 Neuried(DE)**

(54) **Verfahren zur Herstellung eines schichtartig aufgebauten elektrischen Bauteils.**

(57) Auf einer Isolierstoffolie (1) werden nacheinander eine metallische Schicht (2), ein Dielektrikum (3), eine weitere metallische Schicht (4) sowie eine Isolierschicht (5) als Deckschicht aufgedruckt.
Anwendbar bei Kondensatoren und Sensortasten.

## FIG 1

EP 0 260 665 A2

**Verfahren zur Herstellung eines schichtartig aufgebauten elektrischen Bauteils.**

Die Erfindung betrifft ein Verfahren zur Herstellung eines schichtartig ausgebildeten elektrischen Bauelementes mit zumindest zwei auf einer Isolierstoffolie aufgebrachten, durch jeweils eine dielektrische Schicht getrennten metallischen Schichten und/oder Leiterbahnen, sowie einer die äußere metallische Schicht zumindest teilweise abdeckenden Isolierstoffschicht.

Derartig aufgebaute Bauelemente können je nach der Konfiguration der metallischen Schichten oder der Leiterbahnen sowie der Dielektrika als Kondensatoren oder auch als kapazitiv wirkende Tasten eingesetzt werden. Diese Bauelemente stellen im allgemeinen Massenprodukte dar, wobei ihre Herstellungskosten daher besonders stark in die Herstellungskosten des fertigen Produktes eingehen. Bei Kondensatoren ist insbesondere das Dielektrikum von großer Wichtigkeit, da durch dieses unter anderem die Kapazität sowie die Durchschlagsfestigkeit des Kondensators abhängt. Bei Folienkondensatoren ist es üblich, das Dielektrikum durch eine zwischen den Elektroden des Kondensators eingeklebte Folie zu bilden. Dasselbe gilt sinngemäß für kapazitiv arbeitende Tasten. Während nun die metallischen Schichten und die Isolierschichten durch ein modernes Druckverfahren auf die Trägerfolie aufgebracht werden, erfordert das Einbringen des Dielektrikums einen zusätzlichen Arbeitsaufwand. Außerdem muß das Einbringen des Dielektrikums faltenfrei erfolgen, was wegen der geringen Stärke der Folie zur Erzeugung einer hohen Kapazität nicht selten zu Schwierigkeiten führt.

Es ist Aufgabe der Erfindung, die Herstellungskosten von schichtartig aufgebauten elektrischen Bauelementen zu senken.

Die Aufgabe wird gemäß der Erfindung dadurch gelöst, daß alle Schichten und/oder Leiterbahnen nacheinander auf die Isolierstoffolie aufgedruckt werden.

Dadurch wird nunmehr auch das Dielektrikum aufgedruckt, wodurch die Herstellungskosten gesenkt werden können.

Zur Herstellung unterschiedlicher Kapazitäten ist es erforderlich, die Stärke des Dielektrikums zu verändern. Dies kann einmal durch einen stärkeren Druck geschehen. In bestimmten Fällen, insbesondere bei sehr großen Dicken, kann es zweckmäßig sei, daß die dielektrische Schicht aus mehrfach übereinander hergestellten Drucken besteht.

Im folgenden sei die Erfindung anhand von zwei Figuren näher erläutert.

Es zeigt

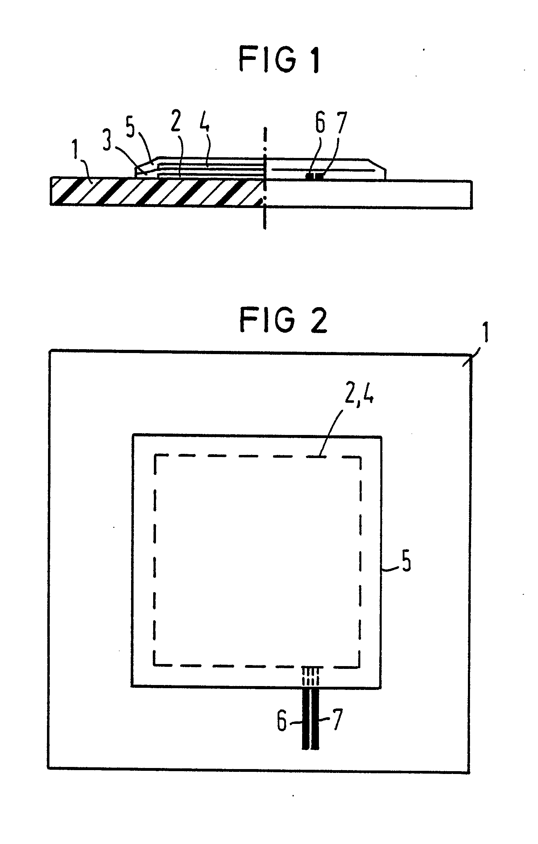

FIG 1 einen Kondensator, teilweise geschnitten

FIG 2 eine Draufsicht auf einen Kondensator

Der Kondensator besteht aus einer Isolierstoffolie 1, auf der im Druckverfahren zunächst eine erste metallische Schicht 2 wie Silber aufgebracht wird. Über dieser Schicht wird in einem weiteren Druck eine dielektrische Schicht 3 aufgedruckt. Diese Schicht deckt die metallische Schicht 2, insbesondere ihren Randbereich, vollständig ab. Auf der dielektrischen Schicht 3 ist nun nochmals eine metallische Schicht 4 aufgedruckt, die die Gegenelektrode zur metallischen Schicht 2 bildet. Um den Kondensator vor Berührung und Korrosion zu schützen, ist schließlich eine Isolierstoffschicht 5 auf der metallischen Schicht 4 aufgedruckt, die wie die dielektrische Schicht wiederum den Randbereich der metallischen Schicht 4 abdeckt. Zur elektrischen Kontaktierung der metallischen Schichten ist die Folie mit Leiterbahnen 6, 7 bedruckt, wobei die Leiterbahn 6 zur metallischen Schicht 4 und die Leiterbahn 7 zur metallischen Schicht 2 führt.

**Ansprüche**

1. Verfahren zur Herstellung eines schichtartig ausgebildeten elektrischen Bauelementes mit zumindest zwei auf einer Isolierstoffolie aufgebrachten, durch jeweils eine dielektrische Schicht getrennten metallischen Schichten und/oder Leiterbahnen, sowie einer die äußere metallische Schicht zumindest teilweise abdeckenden Isolierstoffschicht, **dadurch gekennzeichnet,** daß alle Schichten und/oder Leiterbahnen nacheinander auf die Isolierstoffolie aufgedruckt werden.

2. Verfahren nach Anspruch 1, **dadurch gekennzeichnet,** daß die dielektrische Schicht aus mehrfach übereinander hergestellten Drucken besteht.

# FIG 1

# FIG 2